# EUROPEAN PATENT APPLICATION

(11) **EP 1 596 189 A1**
(43) Date of publication of application: **16.11.2005**
(21) Application number: 04712205.6
(22) Date of filing: 18.02.2004
(51) Int. Cl.: G01N 27/327

(54) **MEASURING INSTRUMENT FOR BIOSENSOR AND MEASURING METHOD USING SAME**

(30) Priority: 21.02.2003 JP 2003044529
(71) Applicant: MATSUSHITA ELECTRIC INDUSTRIAL CO., LTD., Kadoma-shi, Osaka 571-8501 (JP)
(72) Inventor: MIYASHITA, Mariko, (JP); TANIIKE, Yuko, (JP); YOSHIOKA, Toshihiko, (JP)
(74) Representative: TBK-Patent
(86) International application number: PCT/JP2004/001848
(87) International publication number: WO 2004/074827

(57) **Abstract**

There are provided a measuring device for a biosensor, capable of performing a simple, accurate and short-time measurement of a specific substance in a sample without being affected by physical properties of a sample, and a measuring method. In the measuring device for a biosensor in accordance with the present invention, a biosensor is used which includes: a sample supply port; an electrode system having a measurement electrode and a counter electrode; and a portion where a sample can be irradiated with light in at least part of a sample supply pathway, to detect electrical and optical variations in the sample and determine a physical factor of the sample, so that a measurement value can be corrected.

## Description

### Technical Field

The present invention relates to a measuring device for a biosensor, capable of performing a simple, accurate and short-time measurement of the concentration of a specific substance contained in a sample, and to a measuring method using the device.

### Background Art

As a biosensor capable of performing a simple and accurate measurement of a specific substance in a sample without dilution or stirring of the sample, there has hitherto been a biosensor proposed, for example, in Japanese Laid-Open Patent Publication No. Hei 3-202764.

This biosensor is obtained by forming an electrode system on an insulating base plate, and then forming on the electrode system an enzyme reaction layer with a mixture of a hydrophilic polymer, oxidoreductase and an electron mediator. Variations in substance concentration due to a reaction of the oxidoreductase, the electron mediator and the sample are then electrochemically detected with the electrode system to measure a specific substance in the sample.

The measuring operation of this biosensor is described, taking the case of using the biosensor as a glucose sensor for example. When a glucose sensor is supplied with a sample containing glucose, an enzyme reaction layer is dissolved with the sample. Glucose is oxidized by glucose oxidase (GOx) as oxidoreductase in the enzyme reaction layer, while an electron mediator in the enzyme reaction layer is reduced. After the lapse of the prescribed time, as a certain voltage is appropriately applied in between a measurement electrode and a counter electrode, the reduced form of the electron mediator is oxidized. Measurement of an oxidation current value in this oxidation enables determination of the glucose concentration in the sample.

However, in the biosensor described in Japanese Laid-Open Patent Publication No. Hei 3-202764, there were some cases where measurement results were affected by the presence of a substance in a sample, the substance exerting an influence on physical properties of a sample. For example, when a sample is blood, hematocrit values were different among analytes by about 20 to 30 %, and even when the same amount of the sample is used, volume ratios between blood cells as solid component and a liquid component, which are contained in the sample, are different. There has therefore been a problem with this sensor in that, as a hematocrit value increases, blood viscosity becomes higher and blood cells are adsorbed in a greater degree to an electrode and an enzyme, having the effect of causing deterioration in sensor responsibility.

As opposed to this, assuming the case where a measurement interfering substance is contained in a sample, Japanese Laid-Open Patent Publication No. Hei 5-340915 discloses a biosensor in which a main electrode system and a sub electrode system are formed on an insulating base plate, and a reaction layer containing an enzyme is formed on the main electrode system. It is possible to determine the physical properties of the sample, based on the difference between the respective detection times of electrical properties variations in the main electrode system and in the sub electrode system.

The measuring operation of this biosensor is described, taking the case of using the biosensor as a glucose sensor for example. When a sensor is supplied with blood (whole blood) as a sample containing a measurement interfering substance, the blood first arrives at a sub electrode system to lower impedance between a measurement electrode and a counter electrode in the sub electrode system. The blood then arrives at a main electrode system to dissolve a reaction layer in the main electrode system, thereby lowering the impedance between the measurement electrode and the counter electrode in the main electrode system. With the reaction layer dissolved with the blood, glucose in the blood is oxidized by GOx while an electron mediator, allowed to be coexistent with glucose in the reaction layer, is reduced. After the lapse of the prescribed time, as a certain voltage is appropriately applied in between the measurement electrode and the counter electrode, the reduced form of the electron mediator is oxidized. Measurement of an oxidation current value in this oxidation enables determination of the glucose concentration in the sample.

When an oxidation current value was measured with this biosensor, using blood having a hematocrit value (volume ratio between a solid and a liquid in the blood) of 20 to 60 %, the oxidation current value decreased as the hematocrit value increased. Further, when the difference between the respective determination times of impedance variations in the main electrode system and in the sub electrode system was referred to as "t", "t" was found to increase in proportion to the hematocrit value variations. Therefore, if an oxidation current value is corrected using the "t" factor, it is possible to accurately determine glucose in blood without dependence on a hematocrit value. Namely, in this biosensor, arrangement of a sub electrode system separately from a main electrode system allows prediction of the sample viscosity from the time difference between the respective impedance variations in the main electrode system and in the sub electrode system, so that a current value can be corrected.

However, there has been a problem with the technique of Japanese Laid-Open Patent Publication No. Hei 5-340915 in that, since the time difference "t" is employed for correction of a current value, reduction in measurement time itself has to be limited.

Japanese Laid-Open Patent Publication No. Hei 9-105720 discloses a biosensor for optically measuring both a specific substance in blood and a hematocrit value. However, there has been a problem with this biosensor in that reduction in amount of a sample necessary for measurement is difficult because it is necessary to arrange both of capillary chamber section and a reagent section for use in each of the optical measurements as separate sites, and to fill these sections with the sample.

In view of the previously raised problems as thus described, accordingly, it is an object of the present invention to provide a measuring device for a biosensor, capable of performing an accurate measurement without being affected by a substance which exerts an influence on physical properties of a sample even when there exists such a substance, and also provide a measuring method using the device.

In view of the previously raised problems as thus described, it is another object of the present invention to provide a measuring device for a biosensor, capable of performing a rapid and accurate measurement without being affected by physical properties of a sample, by separately arranging a means for determining physical properties of a sample and a means for detecting a sensor response, and a measuring method using the device.

### Disclosure of Invention

The present invention relates to a measuring device for a biosensor, comprising: a supporting section for supporting, in a freely detachable manner, a biosensor which comprises an electrode system having a measurement electrode and a counter electrode, and a sample supply pathway having a portion that can be irradiated with light from the outside; a plurality of connecting terminals electrically connected to the electrode system; an electric signal measuring circuit for applying a voltage to the electrode system via the connecting terminals and for measuring variations in electric signal of the electrode system via the connecting terminals; a light source provided in such a position as to be able to irradiate the portion with light; a light receiving section for receiving light from the portion; an optical signal measuring circuit for measuring optical variations in the portion via the light receiving section; a calculating section for performing a calculation of the electric signal variations and the optical variations; and a display section for displaying results of the operation, the device being capable of measuring a volume ratio between a solid and a liquid contained in a sample by irradiation of the sample supply pathway with light.

In the measuring device for a biosensor, it is preferable that the sample be blood and the volume ratio be a hematocrit value.

The present invention also relates to a measuring method of a specific substance, comprising the steps of:
(a) fixing a biosensor which comprises an electrode system having a measurement electrode and a counter electrode, and a sample supply pathway having a portion that can be irradiated with light from the outside;
(b) connecting the electrode system of the biosensor to connecting terminals for measurement;
(c) supplying the biosensor with a sample;
(d) turning on a light source to irradiate the portion with light;
(e) measuring optical variations in the portion via a light receiving section;
(f) performing a calculation of the measurement result in the step (e);
(g) applying a voltage to the electrode system via the connecting terminals after the lapse of the prescribed time;
(h) measuring a current flowing in the electrode system via the connecting terminals;
(i) performing a calculation of the measurement result in the step (h); and
(j) measuring a volume ratio between a solid and a liquid in the sample from the measurement result in the step (f) to correct the measurement result in the step (i).

It is preferable that the above measuring method of a specific substance further comprise a step (k) of detecting the presence of the sample in the sample supply pathway from the measurement result in the step (f).

### Brief Description of Drawings

FIG. 1 is a top plan view of a biosensor in accordance with an embodiment of the present invention.
FIG. 2 is a sectional view of the biosensor in accordance with the embodiment of the present invention.
FIG. 3 is a schematic perspective view of a measuring device for a biosensor in accordance with an embodiment of the present invention.
FIG. 4 is a perspective view showing how the biosensor has been supported by the measuring device for a biosensor shown in FIG. 3.
FIG. 5 is a block diagram showing the configuration of the measuring device for a biosensor in accordance with the embodiment of the present invention.
FIG. 6 is a sectional view of a biosensor in accordance with another embodiment of the present invention.

### Best Mode for Carrying Out the Invention

In order to solve the aforesaid problems, the present invention provides a measuring device for a biosensor, comprising: a supporting section for supporting, in a freely detachable manner, a biosensor which comprises an electrode system having a measurement electrode and a counter electrode, and a sample supply pathway having a portion that can be irradiated with light from the outside; a plurality of connecting terminals electrically connected to the electrode system; an electric signal measuring circuit for applying a voltage to the electrode system via the connecting terminals and for measuring variations in electric signal of the electrode system via the connecting terminals; a light source provided in such a position as to be able to irradiate the portion with light; a light receiving section for receiving light from the portion; an optical signal measuring circuit for measuring optical variations in the portion via the light receiving section; a calculating section for performing a calculation of the electric signal variations and the optical variations; and a display section for displaying results of the calculation, the device being capable of measuring a volume ratio between a solid and a liquid contained in a sample by irradiation of the sample supply pathway with light.

Namely, the measuring device for a biosensor in accordance with the present invention is characterized in that the combination of an optical system and an electrode system is employed; specifically, a measurement itself is performed by the electrode system and an influence of a hematocrit value by blood is corrected in the optical system. This can make a measuring site of the electrode system and a measuring site of the optical system closer to each other, and with the use of reflected light, only one site can be used as both the measuring site of the electrode system and the measuring site of the optical system. This is effective as rendering a biosensor for use more compact.

A biosensor usable in the present invention comprises: a sample supply port on an insulating base plate; a sample supply pathway communicating to the sample supply port; an electrode system, having a measurement electrode and a counter electrode, arranged in the sample supply pathway; and a reagent section containing an enzyme, wherein at least part of the electrode system and at least part of the reagent section are respectively exposed into the sample supply pathway, and at least part of the sample supply pathway is provided with a portion (light irradiating portion) where a sample in the sample supply pathway can be irradiated with light.

It is preferable that the reagent section be arranged in the vicinity of the electrode system. Further, the reagent section may be arranged in a mixed state with a conductive material, which constitutes the measurement electrode or the counter electrode.

The electrode system, arranged in the sample supply pathway, is positioned closer than the light irradiating portion to the sample supply port. The positioning of the electrode system closer than the light irradiating portion to the sample supply port enables determination of the presence or absence of a sample based on optical variations, whereby it is possible to measure a specific substance in the sample after detecting that a sufficient amount of the sample has been supplied.

Further, when the light irradiating portion is positioned at an upper portion over the electrode system, it is possible to design a shorter sample supply pathway and thereby to reduce an amount of a sample necessary for measurement. It is to be noted that, in this description, the part facing the sample supply pathway in the direction vertical to the surface of the insulating base plate is referred to as "the upper portion".

For allowing light to reach the light irradiating portion, at least part of the constituent members of the biosensor may be made of a light transparent material.

In the measuring device for a biosensor in accordance with the present invention, using the aforesaid biosensor, it is possible to measure a volume ratio between a solid and a liquid contained in a sample by irradiation of a sample supply pathway with light.

As the sample preferably used is a body fluid in which the presence of a substance exerting an influence on the physical properties of the body fluid cannot be ignored, particularly blood. In the case of using blood, the volume ratio is a hematocrit value.

The present invention also relates to a measuring method of a specific substance, using the measuring device for a biosensor in accordance with the present invention, comprising the steps of:
(a) fixing a biosensor which comprises an electrode system having a measurement electrode and a counter electrode, and a sample supply pathway having a portion that can be irradiated with light from the outside;
(b) connecting the electrode system of the biosensor to connecting terminals for measurement;
(c) supplying the biosensor with a sample;
(d) turning on a light source to irradiate the portion with light;
(e) measuring optical variations in the portion via a light receiving section;
(f) performing a calculation of the measurement result in the step (e);
(g) applying a voltage to the electrode system via the connecting terminals after the lapse of the prescribed time;
(h) measuring a current flowing in the electrode system via the connecting terminals;
(i) performing a calculation of the measurement result in the step (h); and
(j) measuring a volume ratio between a solid and a liquid in the sample from the measurement result in the step (f) to correct the measurement result in the step (i).

It is preferable that the above measuring method of a specific substance further comprise a step (k) of detecting the presence of the sample in the sample supply pathway from the measurement result in the step (f).

The measuring method of a specific substance in accordance with the present invention may comprise the step (k) in place of the step (j). In this case, the measuring method of a specific substance in accordance with the present invention comprises the steps of:
(a) fixing a biosensor which comprises an electrode system having a measurement electrode and a counter electrode, and a sample supply pathway having a portion that can be irradiated with light from the outside;
(b) connecting the electrode system of the biosensor to connecting terminals for measurement;
(c) supplying the biosensor with a sample;
(d) turning on a light source to irradiate the portion with light;
(e) measuring optical variations in the portion via a light receiving section;
(f) performing a calculation of the measurement result in the step (e);
(g) applying a voltage to the electrode system via the connecting terminals after the lapse of the prescribed time;
(h) measuring a current flowing in the electrode system via the connecting terminals;
(i) performing a calculation of the measurement result in the step (h); and
(k) detecting the presence of the sample in the sample supply pathway from the measurement result in the step (f).

### Embodiment 1

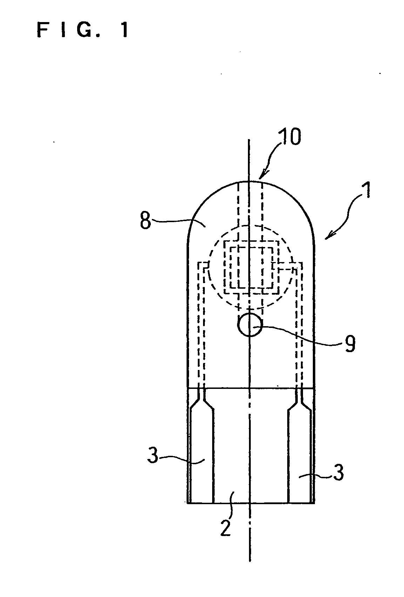

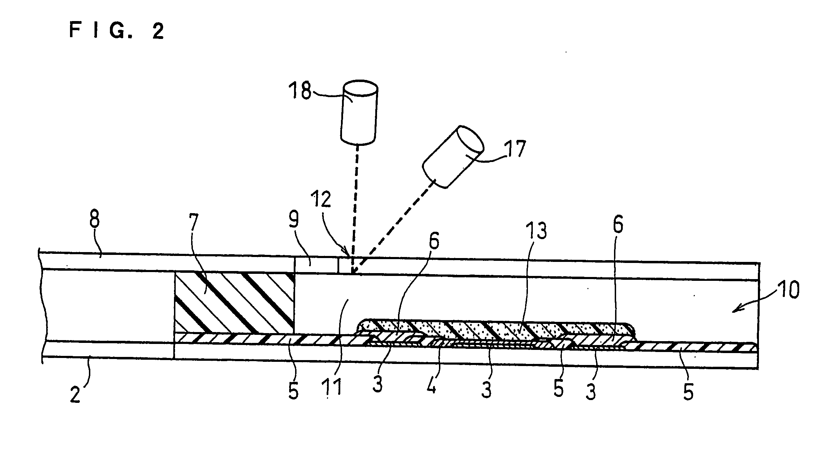

FIG. 1 is a top plan view showing the whole of a biosensor 1 usable in the present invention. In FIG. 1, the center line was shown with a dash-dotted line. FIG. 2 is a cross sectional view of the biosensor cut on the dash-dotted line of FIG. 1. A method for producing a biosensor in accordance with the present invention is described with reference to FIGS. 1 and 2.

First, a silver paste is printed on an insulting base plate 2 made of a resin (polyethylene terephthalate (PET)) by screen printing to form a lead 3. A paste including a resin binder and a conductive carbon is printed to form a measurement electrode 4, and then an insulating paste (resist) is printed to form an insulating layer 5. Finally, the paste including a resin binder and a conductive carbon is again printed to form a counter electrode 6. Herein, the insulating layer 5 regulates the area of the measurement electrode 4.

Subsequently, a reagent section 13 including an enzyme and an electron mediator is formed on an electrode system comprising the measurement electrode 4 and the counter electrode 6. Further, the insulating base plate 2, a resin-made spacer 7 and a cover 8 having an air aperture 9 are sequentially bonded to complete a biosensor 1.

Herein, a transparent resin, e.g. polyethylene terephthalate (PET), is used for the cover 8. Merely by contacting with a sample supply port 10, a sample is introduced into a sample supply pathway 11 which is formed of the spacer 7 and the cover 8, due to capillary phenomenon, and the introduced sample then arrives at a reagent section 13.

### Embodiment 2

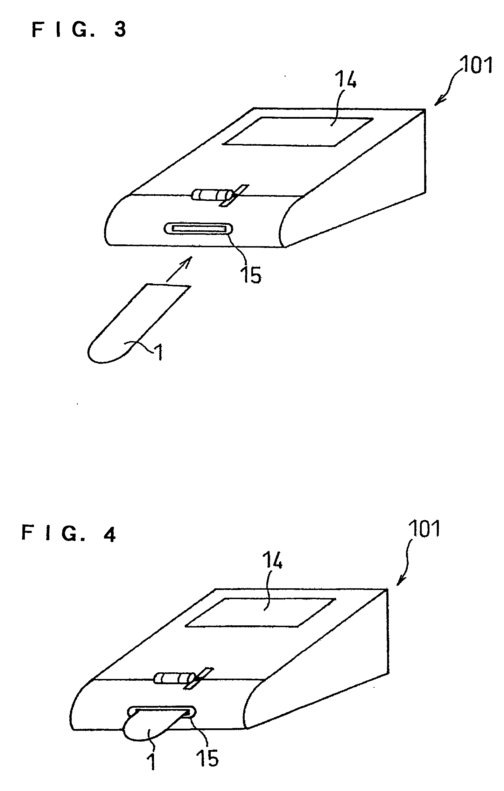

FIG. 3 is a perspective view showing the whole of a biosensor in accordance with an embodiment of the present invention. In FIG. 3, a supporting section 15 is formed in a measuring device 101 for a biosensor, and the biosensor 1 is inserted into this section to be installed and supported. FIG. 4 showed how the biosensor 1 has been installed. With the biosensor 1 inserted into the supporting section 15, preparation for measurement with the measuring device 101 is completed. A display section 14 is arranged in the measuring device 101.

Subsequently, the tip of a finger is stung using a lancet, and after confirmation that blood is oozed from the finger, the blood is brought into contact with the sample supply port 10 of the biosensor 1 so as to be introduced into the biosensor 1. The blood introduced in the biosensor 1 reacts with an enzyme in the reagent section 13. Further, it is possible to determine a volume ratio between a solid and a liquid in the blood by irradiation with light.

It is to be noted that, although not shown in the drawings, the measuring device 101 also comprises: a plurality of connecting terminals which are respectively electrically connected to the electrode system; an electric signal measuring circuit for applying a voltage to the electrode system via the connecting terminals and for measuring variations in electric signal of the electrode system via the connecting terminals; a light source; a light receiving section; an optical signal measuring circuit for measuring optical variations via the light receiving section; and a calculating section for performing a calculation of the electric signal variations and the optical variations.

### Embodiment 3

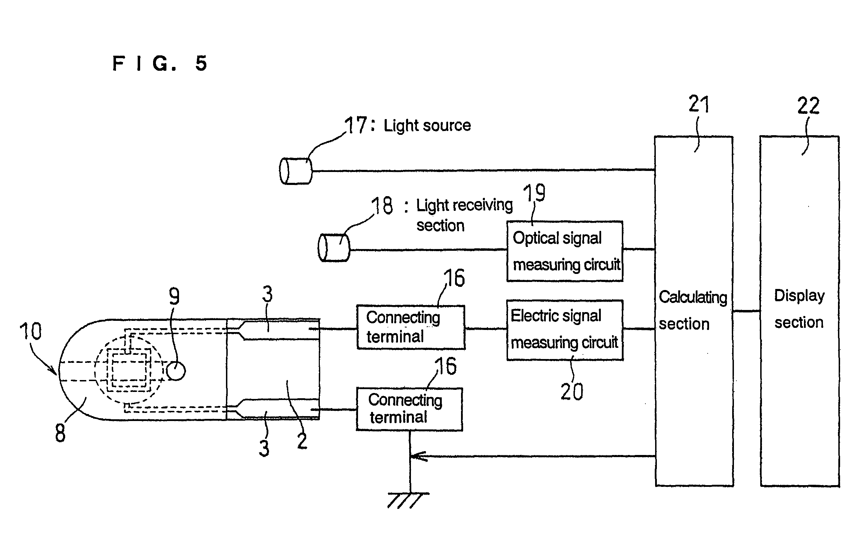

FIG. 5 is a diagram showing the configuration of the measuring device 101 in accordance with the present invention, including the biosensor 1. A measuring method of a specific substance in accordance with the present invention is described with reference to FIG. 5.

First, the biosensor 1 is inserted into the supporting section 15 in the measuring device 101 and then fixed therein (the step (a)). The inner side of the supporting section 15 is provided with a connecting terminal 16 in a position in contact with the lead 3 of the biosensor 1, and the contacting terminal 16 is connected to the lead 3 by the installation of the biosensor 1 (the step (b)).

Upon completion of this step, a sample is supplied from the sample supply port (numeral 10 in FIG. 2) of the biosensor 1 (the step (c)). A light source 17 is then turned on (the step (d)). At this time, the light source 17 is arranged at an upper portion over the biosensor 1 inserted in the measuring device 101, i.e. such a position as to be able to irradiate a prescribed portion with light (light irradiating portion), as shown in FIG. 2.

The light irradiating portion 12 is arranged in the transparent cover 8 covering the sample supply pathway 11, and positioned, as seen from the sample supply port 10, at the back side end of the counter electrode 5, and in front of the air aperture 9.

Subsequently, the light, with which the light irradiating portion 12 is irradiated from the light source 17, is received in a light receiving section 18, and a measurement of optical variations takes place (the step (e)). This measurement is performed using an optical signal measuring circuit 19, and a volume ratio between a solid and a liquid in the sample is determined with a calculating section 21 based on the obtained measured value (the step (f)).

Further, in the measuring method of a specific substance in accordance with the present invention, as the sample is introduced from the sample supply port 10 into the sample supply pathway 11 and then reaches the light irradiating portion 12, optical variations can be detected with the light receiving section 18, whereby it is possible to determine with the calculating section 21 that the sample has been supplied in enough an amount for the measurement in the biosensor 1 (the step (j)).

Upon introduction of the sample into the sample supply pathway 11, the redoxed state of the electron mediator varies through a reaction between the enzyme contained in the reagent section 13 and a substrate as a specific substance in the sample. After the lapse of the prescribed time, a current value, obtained through an electrochemical redox reaction of the electron mediator that occurs due to application of a voltage from an electric signal measuring circuit 20 to between the electrodes (the step (g)), is measured in the aforesaid electric signal measuring circuit 20 (the step (h)). At this time, scattered light intensity or reflected light intensity in the light receiving section 18 is measured, to determine a volume ratio between a solid and a liquid contained in the sample so that the current value can be corrected. The aforesaid determination of the volume ratio and the correction of the current value are performed in the calculating section 21.

Numeric values obtained in the step (h) are converted into numeric information of the sample (the step (i)), which is displayed in the display section 14. The numeric values displayed in the display section 14 are a blood sugar level, a plasma volume (amount of a liquid in the sample) and a hematocrit value.

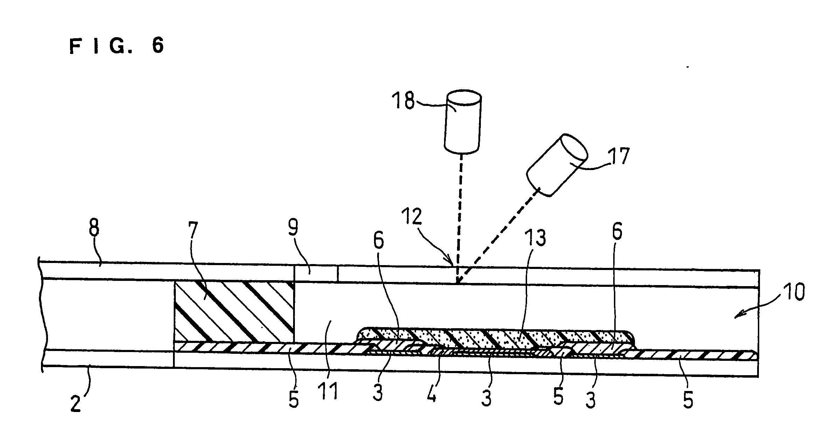

It should be noted that, although this embodiment showed the case where the electrode system is positioned closer than light irradiating portion to the sample supply port 10, the light irradiating portion may be arranged at an upper portion over the electrode system, as shown in FIG. 6. Such an arrangement can make the sample supply pathway shorter. It is to be noted that the same constituent elements as the constituent elements represented by numerals in FIG. 2 were represented by the same numerals as in FIG. 6.

### Example 1

The glucose concentration in blood as a sample was measured using the biosensor 1 described in Embodiment 1 above and the measuring device 101 described in Embodiment 3 above.

The reagent section 13 in the biosensor 1 was produced as follows. First, an aqueous solution containing glucose dehydrogenase as an enzyme and potassium ferricyanide as an electron mediator was dropped and then dried to form an enzyme layer. For facilitating suctioning of the sample, the surface of the enzyme layer was hydrophilically treated by dropping a solution containing lecithin onto the enzyme layer, followed by drying.

Herein, blood, having been adjusted so as to contain glucose at a concentration of 100 mg/dl and to have previously regulated several sorts of hematocrit values, was applied to the biosensor 1 installed in the measuring device 101, to measure intensity of a reflected light with a wavelength (λ) of 550 nm immediately after the application. As a result, the hematocrit value and the reflected light intensity were found correlative and the reflected light intensity decreased with the increase of the hematocrit value.

Here, the reason for using the reflected light with a wavelength of 550 nm for correcting the hematocrit value is described. A hematocrit value is a volume ratio between a solid and a liquid in blood, and most of the solid component is red blood cells. Hemoglobins present in the red blood cells are classified into deoxyhemoglobin (absorption maximum: 555 nm) which is not bound to oxygen, and oxyhemoglobin (absorption maximum: 577, 540 nm) which is bound to oxygen. Although the hemoglobins each have an absorption maximum in a visible region, they have a different absorption maximum wavelength depending on the state of binding to oxygen. Therefore, the hemoglobin concentration in blood is desirably measured by using wavelengths at isosbestic points (in the vicinity of 520, 550, 570, 585 nm) of absorption spectrums of deoxyhemoglobin and oxyhemoglobin.

In this manner, it is possible to accurately measure an amount of hemoglobins without dependence on the state of binding to oxygen. Although 550 nm was selected out of the wavelengths at the above isoabdorption points in the present example, this should not be a limitation. Further, the correlation between reflected light intensity and a hematocrit value depends on materials for or a configuration of a biosensor to be used.

Using the same blood, a potential of 500 mV (versus the counter electrode 6) was applied to the measurement electrode 4 after the lapse of the prescribed time of "t" seconds, and a current value was measured 5 seconds after the application, to find that the current value decreased with the increase of the previously regulated hematocrit value. From this result, the correlation among the reflected light intensity, the hematocrit value and the current value was determined so as to obtain a correction table.

The comparison between the case of using this correction table and the case of not using it reveals that the hematocrit value exerted a smaller influence in using the correction table than in not using it.

Although, in Embodiment 1 above, the portion where a sample can be irradiated with light was arranged in the sample supply pathway 11 by using transparent PET as the cover 8, a light transparent material may be employed for part or all of the constituent members of the sample supply pathway 11. As for the light transparent material, such a resin as polyethylene terephthalate or glass is suitable.

Even when a light transparent material is not used as a constituent member of a biosensor, a portion where a sample can be irradiated with light can be provided by formation of a cut-out section or the like. Although the light receiving section 18 was arranged in a position capable of detecting scattered light and reflected light, it may be arranged in a position capable of detecting transmitted light.

The measuring device shown in Embodiment 1 may further comprise a spectral means on a light path "L" from the light source to permit irradiation with a light having a specific wavelength.

Characteristics of a sample which are determinable using the aforesaid biosensor and measuring device for a biosensor may include a color and viscosity of a sample, and an amount of a suspending solid component (including an insoluble matter) in a sample. The determination of those characteristics enables measurement of a specific substance in a sample. When a difference in color of a sample can be detected, for example, it is possible to distinguish between blood and a standard solution for use in evaluation of an operation of a blood sugar self-measuring device.

### Industrial Applicability

As thus described, according to the present invention, it is possible to provide a measuring device for a biosensor, capable of performing a simple, accurate and short-time measurement of a specific substance in a sample without being affected by physical properties of a sample, and a measuring method of a specific substance.

## Claims

1. A measuring device for a biosensor, comprising:
a supporting section for supporting, in a freely detachable manner, a biosensor which comprises an electrode system having a measurement electrode and a counter electrode, and a sample supply pathway having a portion that can be irradiated with light from the outside;
a plurality of connecting terminals electrically connected to said electrode system;
an electric signal measuring circuit for applying a voltage to said electrode system via said connecting terminals and for measuring variations in electric signal of said electrode system via said connecting terminals;
a light source provided in such a position as to be able to irradiate said portion with light;
a light receiving section for receiving light from said portion;
an optical signal measuring circuit for measuring optical variations in said portion via said light receiving section;
a calculating section for performing a calculation of said variations in electric signal and said optical variations; and
a display section for displaying results of said calculation,
said device being capable of measuring a volume ratio between a solid and a liquid contained in a sample by irradiation of said sample supply pathway with light.

2. The measuring device for a biosensor in accordance with claim 1, wherein said sample is blood and said volume ratio is a hematocrit value.

3. A measuring method of a specific substance, comprising the steps of:
(a) fixing a biosensor which comprises an electrode system having a measurement electrode and a counter electrode, and a sample supply pathway having a portion that can be irradiated with light from the outside;
(b) connecting said electrode system of said biosensor to connecting terminals for measurement;
(c) supplying said biosensor with a sample;
(d) turning on a light source to irradiate said portion with light;
(e) measuring optical variations in said portion via a light receiving section;
(f) performing a calculation of the measurement result in said step (e);
(g) applying a voltage to said electrode system via said connecting terminals after the lapse of the prescribed time;
(h) measuring a current flowing in said electrode system via said connecting terminals;
(i) performing a calculation of the measurement result in said step (h); and
(j) measuring a volume ratio between a solid and a liquid in said sample from the measurement result in said step (f) to correct the measurement result in said step (i).

4. The measuring method of a specific substance in accordance with claim 3, further comprising a step (k) of detecting the presence of said sample in said sample supply pathway from the measurement result in said step (f).
